# EUROPÄISCHE PATENTSCHRIFT

(11) **EP 3 008 017 B1**
(45) Veröffentlichungstag und Bekanntmachung des Hinweises auf die Patenterteilung: **26.04.2017**
(21) Anmeldenummer: 14729891.3
(22) Anmeldetag: 11.06.2014
(51) Int. Cl.: C02F 1/78, D06P 1/00, D06P 5/15, D06L 1/14, D06L 1/20, C02F 101/30, C02F 103/30

(54) **VERFAHREN ZUR VEREDELUNG VON JEANSSTOFFEN**
METHOD FOR FINISHING DENIM
PROCÉDÉ D'ENNOBLISSEMENT DE TISSUS DENIM

(30) Priorität: 13.06.2013 DE 102013106193
(43) Veröffentlichungstag der Anmeldung: 20.04.2016
(73) Patentinhaber: ProMinent GmbH, 69123 Heidelberg (DE)
(72) Erfinder: BAUMGÄRTNER, Bernhard, 69117 Heidelberg (DE)
(74) Vertreter: WSL Patentanwälte Partnerschaft mbB
(86) Internationale Anmeldenummer: PCT/EP2014/062069
(87) Internationale Veröffentlichungsnummer: WO 2014/198744

(56) Entgegenhaltungen:
- WO-A1-2014/107142
- DE-A1-102008 056 308
- US-A- 5 313 811
- DATABASE WPI Week 201343 Thomson Scientific, London, GB; AN 2013-G69654 XP002733207, & CN 202 610 067 U (LIU H) 19. Dezember 2012 (2012-12-19)

## Beschreibung

Die vorliegende Erfindung beschreibt ein Verfahren zum Veredeln von Jeansstoff. Jeansstoff oder auch Denim ist ein Baumwollstoff in Köperbindung, der hauptsächlich zur Herstellung von Hosen, den sogenannten Jeans, verwendet wird.

Eine Besonderheit des Jeansstoffes ist, dass er nicht durchgängig gefärbt ist, sondern aus - meist mit Indigo - gefärbten Kettfäden und ungefärbten Schussfäden gewebt wird. Dies führt dazu, dass das Aussehen des Jeansstoffes auf der einen Seite im Wesentlichen durch die ungefärbten Schussfäden geprägt und daher vergleichsweise hell ist und auf der anderen Seite im Wesentlichen durch die gefärbten Kettfäden geprägt und daher vergleichsweise dunkel ist.

Aufgrund der relativ hohen Kräfte, die beim automatisierten Weben auf die Garne ausgeübt werden, werden die verwendeten Kettengarne häufig mit Schlichtestärke oder entsprechenden Derivaten beschichtet, um die Zugfestigkeit der Garne zu erhöhen und ein Reißen während des Webvorgangs zu verhindern.

Diese Schlichtemittel sind jedoch im Jeansstoff noch enthalten und führen zu einer in der Regel nicht gewünschten Steifheit des Stoffes. Der Jeansstoff weist zudem Im Falle der Färbung der Kettfäden mit Indigo einseitig eine gleichmäßig tiefblaue Farbe auf.

Sowohl die Steifigkeit als auch die gleichmäßige Färbung ist jedoch insbesondere bei Jeanshosen häufig nicht gewünscht.

Daher wird der Jeansstoff ein oder mehrerer Veredelungsschritten unterzogen. Typische Veredelungsschritte sind das Entschlichten, eine abrasive Behandlung und gegebenenfalls ein Bleichen, durch die das Aussehen und die Griffigkeit des Jeansstoffes mit Hilfe von chemischen Zusatzstoffen entsprechend den Anforderungen der Modeindustrie angepasst wird.

In der Regel sieht daher ein erster Veredelungsschritt das Entschlichten vor, um die Schichtestärke aus dem Jeansstoff zu entfernen. Dies kann beispielsweise dadurch erfolgen, dass der Jeansstoff in einer wässrigen Lösung, der entsprechende Enzyme zugesetzt worden sind, gewaschen wird. Während des Waschvorgangs wird jedoch nicht nur die verbleibende Schlichtestärke aus dem Jeansstoff entfernt, sondern auch Indigo aus den Kettfäden herausgespült, so dass sich die wässrige Lösung während des Waschvorgangs blau verfärbt.

Die blau verfärbte wässrige Lösung kann wiederum ihrerseits die bislang ungefärbten Schussfäden blau verfärben. Dies ist jedoch nicht gewünscht.

Daher ist es notwendig, das verfärbte Wasser rechtzeitig zu entfernen und durch Frischwasser zu ersetzen, um ein Abfärben auf die Schussfäden zu verhindern. Die mit Indigo verfärbte wässrige Lösung wird dem Abwasser zugeführt.

Allein für den Entschlichteprozess muss daher die Waschtrommel, in der die Veredelung stattfindet, mehrfach mit Frischwasser gefüllt werden.

Ein weiterer Veredelungsschritt ist die sogenannte "Stone-Washing"-Behandlung des Jeansstoffes, um dem Jeansstoff ein gebrauchtes Aussehen zu verleihen. Dies kann beispielsweise durch Waschen des Jeansstoffes in einer mit wässriger Lösung gefüllter Waschtrommel erfolgen, wobei die wässrige Lösung neben chemischen Zusätzen auch Bimssteine enthält, die für eine abrasive Behandlung des Jeansstoffes während des Waschvorgangs sorgen. Alternativ dazu kann die "Stone-Washing"-Behandlung auch ohne Bimssteine erfolgen, in diesem Fall erfolgt die Behandlung in einer mit geeigneten Enzymen versetzten wässrigen Lösung.

Auch hier kommt es während des Waschvorgangs zwangsläufig zu einer Blaufärbung des Wassers, so dass das verfärbte Wasser rechtzeitig entfernt und durch Frischwasser ersetzt werden muss, um ein Verfärben der ungefärbten Schussfäden zu verhindern.

Für die beiden beschriebenen Veredelungsschritte sind daher beispielsweise bei einer 1.000 Liter umfassenden Waschtrommel, mit der etwa 100 kg Jeansstoff veredelt werden können, etwa neun bis zwölf Trommelfüllungen mit Frischwasser, das heißt 9.000 bis 12.000 Liter Wasser notwendig.

Die US 5,313,818 beschreibt eine Vorrichtung zur Behandlung von Textilien mit oxidierenden Gasen. Dabei geht es im Wesentlichen um das Zusetzen von Ozon, um ungelöste Farbstoffe, wie zum Beispiel Indigo, aus den Textilien zu entfernen und damit die Vergilbung von indigogefärbten Textilien zu verhindern.

Die DE 10 2008 056 308 beschreibt eine Vorrichtung und ein Verfahren zum Färben eines textilen Substrates, bei dem die Färbe- oder Spülflotte in einer separat zur Verfügung gestellten Wasseraufbereitungseinrichtung aufbereitet wird.

Ausgehend von dem beschriebenen Stand der Technik ist es daher Aufgabe der vorliegenden Erfindung, ein Verfahren anzugeben, mit dem der Wasserverbrauch während der Veredelung deutlich reduziert werden kann.

Erfindungsgemäß wird die Aufgabe durch ein Verfahren gemäß Anspruch 1 gelöst.

Auch wenn das erfindungsgemäße Verfahren grundsätzlich auch zu einer Reduzierung des Wasserverbrauchs führt, wenn nur ein Teil der verfärbten wässrigen Lösung einem Entfärbeprozess unterzogen wird und bei der Behandlung wiederverwendet wird, so ist doch eine Ausführungsform bevorzugt bei der im Wesentlichen die gesamte wässrige Lösung einem Entfärbeprozess unterzogen wird und die entfärbte wässrige Lösung bei der Behandlung verwendet wird.

Bei dem Entfärbeprozess wird lediglich der Farbstoff aus der wässrigen Lösung entfernt oder so verändert, dass ein Abfärben auf die Schussfäden verhindert wird.

Eine Aufbereitung des Wassers in Trinkwasser erfolgt nicht. Daher verbleibt in einer bevorzugten Ausführungsform zumindest der überwiegende Anteil, der in der verfärbten wässrigen Lösung enthaltenen Zusatzstoffe, z.B. die Enzyme, auch nach dem Entfärbeprozess in der entfärbten wässrigen Lösung. Diese Zusatzstoffe können bei der weiteren Veredelungsbehandlung weiterverwendet werden. Doch selbst wenn der gewählte Veredelungsschritt eine Weiterverwendung der Zusatzstoffe nicht erlaubt, z.B. weil sie im vorherigen Waschvorgang chemisch verändert wurden, können sie dennoch in der wässrigen Lösung verbleiben, da sie die weitere Veredelung nicht negativ beeinflussen.

Das erfindungsgemäße Verfahren kann in einer bevorzugten Ausführungsform sowohl beim Entschlichten als auch bei der Stone-Washing-Behandlung des Jeansstoffes zum Einsatz kommen.

Beispielswiese kann das Entschlichteverfahren oder die Stone-Washing-Behandlung jeweils aus mehreren nacheinander durchgeführten Waschvorgängen bestehen, wobei zumindest ein Waschvorgang zumindest teilweise mit entfärbter wässriger Lösung durchgeführt wird, die nach einem vorherigen Waschvorgang entfernt und entfärbt worden ist.

So kann beispielsweise die entfärbte wässrige Lösung zur Veredelung desselben Jeansstoffes verwendet werden.

Alternativ dazu könnte die gefärbte wässrige Lösung auch entfernt werden und nach dem Entfärbeprozess zur Veredelung eines zweiten Jeansstoffes verwendet werden. Üblicherweise werden in entsprechenden Veredelungsbetrieben große Mengen an Jeansstoff veredelt. Das entfernte Wasser kann dann entfärbt werden, während die Veredelung fortgesetzt wird. Sobald die Entfärbung stattgefunden hat, kann das entfärbte Wasser für beispielsweise die nachfolgende Jeansstoffcharge verwendet werden. In diesem Fall müsste die entfernte und entfärbte wässrige Lösung jedoch zwischengelagert werden bis die nächste Jeansstoffcharge für die Veredelung bereit steht.

In einer besonders bevorzugten Ausführungsform wird beim Entfärbeprozess Ozon verwendet, wobei vorzugsweise Ozon in die wässrige Lösung eingebracht wird. Dabei dient das Ozon lediglich der Entfärbung des abgezogenen Wassers und wird nicht zum Bleichen der Jeans verwendet.

Insbesondere die Entfärbung mit Ozon ermöglicht auch eine permanente Entfärbung während des Veredelungsverfahrens. Es ist dann nicht mehr notwendig, den Waschvorgang zu unterbrechen und die verfärbte wässrige Lösung abzulassen und zu entfärben, bevor der nächste Waschvorgang erfolgt. Es ist vielmehr möglich, das Veredelungsverfahren mit einem einzigen - entsprechend langen - Waschgang durchzuführen, wobei kontinuierlich wässrige Lösung aus der Waschtrommel abgepumpt, Ozon in die abgepumpte wässrige Lösung eingebracht wird und das derart entfärbte Wasser wieder dem Waschgang zugeführt wird. Dadurch, dass kontinuierlich eine Entfärbung stattfindet, wird der Anteil an Farbstoffen in der wässrigen Lösung nicht über einen vorgegebenen Grenzwert ansteigen. So dass ein Abfärben auf die Schussfäden verhindert oder zumindest minimiert wird.

In der Regel wird es jedoch am Schluss des Waschganges notwendig sein, den Jeansstoff zumindest einmal mit Frischwasser auszuspülen.

Durch das beschriebene erfindungsgemäße Verfahren kann daher in der Praxis die Menge an notwendigem Frischwasser um mindestens 50 bis 60% gegenüber den bekannten Verfahren reduziert werden. Darüber hinaus kann die Menge an notwendigen chemischen Zusatzstoffen verringert werden. Schließlich wird das Veredelungsverfahren beschleunigt, da kontinuierlich ein Teil der wässrigen Lösung entfärbt wird, ohne dass die Veredelungsbehandlung unterbrochen werden muss, um verfärbtes Wasser gegen Frischwasser auszutauschen.

Weitere Vorteile, Merkmale und Anwendungsmöglichkeiten werden deutlich anhand der folgenden Beschreibung einer bevorzugten Ausführungsform und der dazugehörigen Figuren. Es zeigen:
Figur 1 ein Ablaufdiagramm eines Veredelungsverfahrens des Standes der Technik,
Figur 2 ein Ablaufdiagramm einer Ausführungsform der Erfindung und
Figur 3 eine schematische Darstellung einer erfindungsgemäßen Waschtrommel.

Bei der Veredelung von Jeansstoffen, wie zum Beispiel dem Entschlichten oder der abrasiven Behandlung zur Erzeugung eines "Stoned-Wash"-Aussehens, wird die Griffigkeit und das Aussehen des Jeansstoffes in einem Waschprozess mit Hilfe von Chemikalien entsprechend den Anforderungen der Retail-Betriebe verändert.

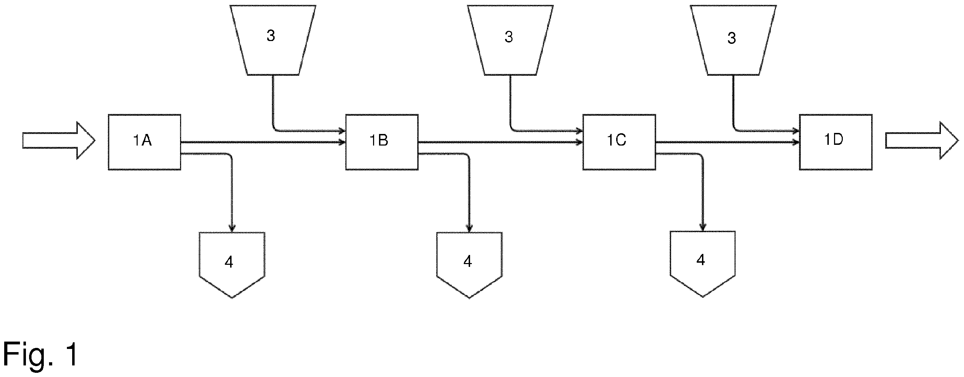

In Figur 1 ist beispielhaft das übliche Veredelungsverfahren schematisch dargestellt und wird im Folgenden anhand des Entschlichten-Schrittes erläutert. Prinzipiell der gleiche Ablauf erfolgt jedoch auch bei der Stone-Washing-Behandlung des Jeansstoffes.

Der zu veredelnde Jeansstoff wird zusammen mit Frischwasser und den chemischen Zusatzstoffen in Schritt 1A gewaschen, um das Schlichtemittel, das im Jeansstoff enthalten ist, aus diesem zu entfernen. Aufgrund der intensiven Blaufärbung des Kettgarnes wird während des Waschvorgangs das Wasser mit dem Farbstoff verfärbt. Um ein Abfärben von dem verfärbten Wasser auf die ungefärbten Schussgarne zu minimieren, wird der Waschvorgang (1 A) abgebrochen, das verfärbte Wasser dem Abwasser bzw. der Kläranlage 4 zugeführt und der Jeansstoff wird zusammen mit Frischwasser 3 in einem zweiten Waschvorgang 1 B weiterverarbeitet. Auch im zweiten Waschvorgang 1 B kann es zu einer Verfärbung der wässrigen Lösung kommen, so dass auch hier der Waschvorgang abgebrochen wird, das verfärbte Wasser dem Abwasser 4 zugeführt wird und vor Beginn des dritten Waschvorgangs 1C die Trommel mit Frischwasser 3 aufgefüllt wird.

Je nach gewähltem Veredelungsverfahren wird der eigentliche Waschvorgang in mindestens zwei, häufig zehn bis zwölf, Waschvorgänge unterteilt, die jeweils mit Frischwasser durchgeführt werden. Typischerweise erfolgt der Waschvorgang in relativ großen Waschtrommeln mit einem Fassungsvermögen von 1.000 Litern, in den etwa 100 kg Jeans bis zu sechs Stunden lang für die Veredelung gewaschen werden.

Der Wasserverbrauch für die Veredelung von Jeansstoff ist daher immens.

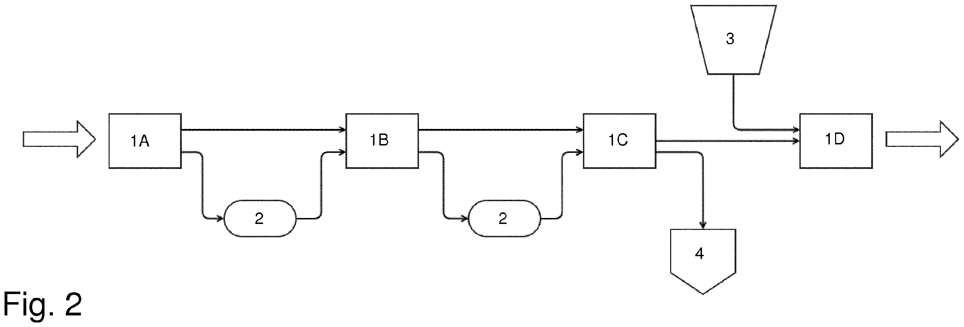

In Figur 2 ist der Ablauf einer Ausführungsform des erfindungsgemäßen Verfahrens gezeigt. Man erkennt, dass beispielsweise zwischen dem ersten Waschvorgang 1 A und dem zweiten Waschvorgang 1 B nun kein Frischwasser 3 nachgefüllt wird. Stattdessen wird das verfärbte Wasser einer Ozonreinigungsanlage 2 hinzugeführt, in der die wässrige Lösung mit Ozon versetzt wird, um die wässrige Lösung zu entfärben.

Die derart entfärbte Lösung wird im zweiten Waschgang 1 B wiederverwendet. Gleiches erfolgt in der gezeigten Ausführungsform auch zwischen dem zweiten und dritten Waschgang. Lediglich vor dem letzten Waschvorgang wird die verfärbte wässrige Lösung dem Abwasser 4 zugeführt und ein Waschvorgang mit Frischwasser erfolgt, um auch die chemischen Zuschlagstoffe, die beim Veredeln verwendet worden sind, aus dem Jeansstoff zu entfernen.

Durch Vergleich der Figuren 1 und 2 wird deutlich, dass durch das beschriebene Verfahren zwei Drittel der Frischwassermenge eingespart werden können. Zudem wird auch nur ein Drittel der Wassermenge dem Abwasser zugeführt, wodurch üblicherweise vorhandene Kläranlagen entlastet werden. Je nach verwendeten chemischen Zusatzstoffen kann das erfindungsgemäße Verfahren auch die Menge an benötigten chemischen Zuschlagstoffen verringern, da durch die Wasserbehandlung mit Ozon die chemischen Zuschlagstoffe nicht entfernt werden und daher im Folgewaschvorgang noch zur Verfügung stehen. Weiterhin wird die Belastung des Abwassers mit blauem Indigo-Farbstoff deutlich reduziert.

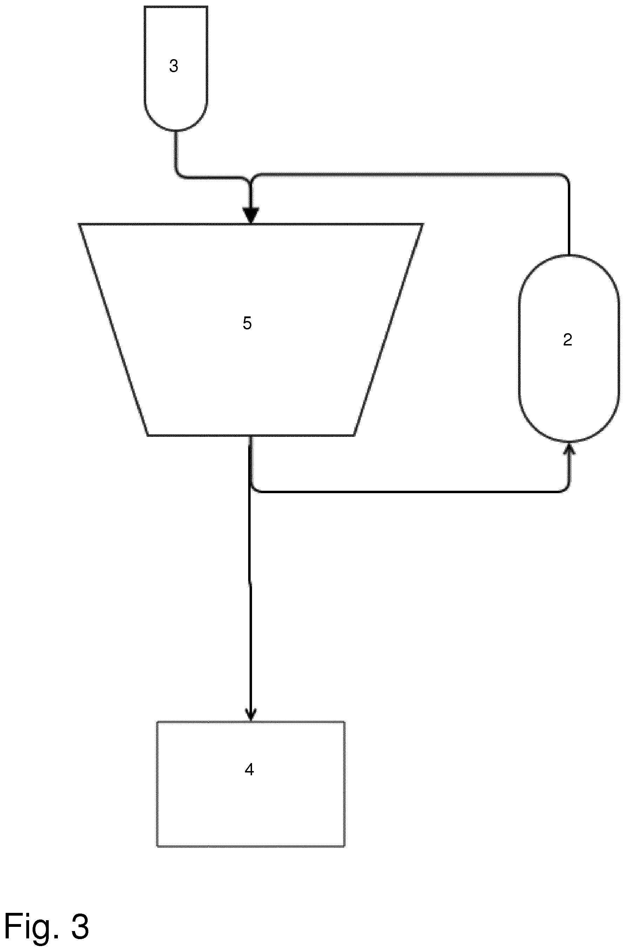

In Figur 3 ist eine schematische Darstellung einer Waschtrommel 5 gezeigt, in der der Jeansstoff zur Veredelung gewaschen werden kann. Frischwasser 3 und gegebenenfalls chemische Zuschlagstoffe können in die Trommel 5 zusammen mit dem Jeansstoff eingegeben werden. Nach dem ersten Waschvorgang wird dann zumindest ein Teil der wässrigen Lösung mit Hilfe der Ozonbehandlungsanlage 2 aus der Trommel 5 abgezogen und nach erfolgter Entfärbung wieder in die Trommel zugeführt. Lediglich im letzten Waschgang wird die wässrige Lösung dem Abwasser 4 zugeführt.

Die Ozonbehandlungsanlage 2 weist in einer bevorzugten Ausführungsform einen statischen Mischer auf, bei dem in einem Stahlrohr mehrere Drallscheiben eingearbeitet sind, die die wässrige Lösung und eventuell Wasser enthaltende Fasern durchlassen. Die Drallscheiben geben der wässrigen Lösung und den darin verteilten Ozongasblasen eine strake Drehbewegung. Damit werden die Ozongasblasen fein zerschlagen und eine große Menge an Ozon löst sich im Wasser und führt zu der beschriebenen Entfärbung.

Das beschriebene Verfahren kann nicht nur beim Entschlichten verwendet werden, sondern alternativ oder in Kombination auch bei der Stone-Washing-Behandlung, bei der beispielsweise Enzyme oder eine große Menge an Bimssteinen in die Waschtrommel zugeführt wird, um das Erscheinungsbild des Jeansstoffes zu verändern. Auch hier wird das blauverfärbte Waschwasser solange mit Ozon behandelt, bis es soweit entfärbt ist, dass es weiterverwendet werden kann. Das normalerweise erforderliche Ablassen des Wassers und das Auffüllen der Trommel mit frischem Wasser entfällt.

## Patentansprüche

1. Verfahren zum Veredeln eines ersten Jeansstoffes, bei dem der erste Jeansstoff zumindest einmal in einer wässrigen Lösung mit Zusatzstoffen behandelt wird, wobei während der Behandlung verfärbte wässrige Lösung entfernt wird und nichtverfärbte wässrige Lösung zugegeben wird, **dadurch gekennzeichnet, dass** zumindest ein Teil der verfärbten wässrigen Lösung einem Entfärbeprozess unterzogen wird und die entfärbte wässrige Lösung bei der Behandlung verwendet wird, wobei die Behandlung in einer Waschtrommel erfolgt, und während der Behandlung in der Waschtrommel, ein Teil der verfärbten wässrigen Lösung mit Hilfe einer Pumpe aus der Waschtrommel und über eine Entfärbeanlage wieder in die Waschtrommel gepumpt wird.

2. Verfahren nach Anspruch 1, **dadurch gekennzeichnet, dass** zumindest der überwiegende Anteil der Zusatzstoffe in der verfärbten wässrigen Lösung bei dem Entfärbeprozess nicht entfernt werden und die entfärbte wässrige Lösung mit dem zumindest überwiegenden Anteil der Zusatzstoffe bei der Behandlung verwendet wird.

3. Verfahren nach Anspruch 1, **dadurch gekennzeichnet, dass** die Behandlung ein Entschlichteverfahren ist, um Schlichtemittel aus dem Jeansstoff zu entfernen.

4. Verfahren nach Anspruch 1 oder 2, **dadurch gekennzeichnet, dass** die Behandlung eine Stone-Washing-Behandlung des Jeansstoffes ist, um ein "Stoned-Wash"-Aussehen zu erzielen.

5. Verfahren nach einem der Ansprüche 1 bis 3, **dadurch gekennzeichnet, dass** die entfärbte wässrige Lösung zur Veredelung des ersten Jeansstoffes verwendet wird.

6. Verfahren nach einem der Ansprüche 1 bis 3, **dadurch gekennzeichnet, dass** die entfärbte wässrige Lösung zur Veredelung eines zweiten Jeansstoffes verwendet wird.

7. Verfahren nach einem der Ansprüche 1 bis 5, **dadurch gekennzeichnet, dass** beim Entfärbeprozess Ozon verwendet wird, wobei vorzugsweise Ozon in die wässrige Lösung eingebracht wird.

8. Verfahren nach einem der Ansprüche 1 bis 7, **dadurch gekennzeichnet, dass** während des Entfärbeprozess wässrige Lösung in der Waschtrommel verbleibt und die Behandlung fortgesetzt wird.

## Claims

1. Process for finishing a first denim fabric wherein the first denim fabric is at least once treated in an aqueous solution with additives, wherein discolored aqueous solution is removed during the treatment and not discolored aqueous solution is added, **characterized in that** at least a portion of the discolored aqueous solution is subjected to a bleaching process and the decolorized aqueous solution is used in the treatment, wherein the treatment is conducted in a washing drum and during the treatment in the washing drum a part of the discolored aqueous solution is pumped out of the washing drum by means of a pump and is pumped back into the washing drum by means of a bleaching device.

2. A method according to claim 1, **characterized in that** at least the predominant proportion of the additives in the discolored aqueous solution is not removed during the bleaching process and the decolorized aqueous solution is used with the at least predominant proportion of the additives in the treatment.

3. A method according to claim 1, **characterized in that** the treatment is a desizing method to remove sizing means from the denim fabric.

4. The method of claim 1 or 2, **characterized in that** the treatment is a stone washing treatment of the denim fabric in order to achieve a "stoned wash" appearance.

5. A method according to any one of claims 1 to 3, **characterized in that** the decolorized aqueous solution is used for finishing of the first denim fabric.

6. A method according to any one of claims 1 to 3, **characterized in that** the decolorized aqueous solution is used for finishing a second denim fabric.

7. Method according to one of claims 1 to 5, **characterized in that** during the bleaching process ozone is used, wherein preferably ozone is introduced into the aqueous solution.

8. Method according to one of claims 1 to 7, **characterized in that** during the bleaching process aqueous solution remains in the washing drum and the treatment is continued.

## Revendications

1. Procédé d'ennoblissement d'un premier tissu denim, dans lequel le premier tissu denim est traité au moins une fois dans une solution aqueuse contenant des additifs, la solution aqueuse **colorée pendant le traitement** étant éliminée et une solution aqueuse non colorée étant ajoutée, **caractérisé en ce qu'**au moins une partie de la solution aqueuse colorée est soumise à un processus de décoloration et **que** la solution aqueuse décolorée est utilisée lors du traitement, le traitement s'effectuant dans un tambour de lavage et, au cours du traitement dans le tambour de lavage, une partie de la solution aqueuse colorée étant pompée depuis le tambour de lavage à l'aide d'une pompe et de nouveau pompée vers le tambour de lavage via une installation de décoloration.

2. Procédé selon la revendication 1, **caractérisé en ce qu'**au moins la majeure partie des additifs dans la solution aqueuse colorée n'est pas éliminée lors du processus de décoloration et **en ce que** la solution aqueuse décolorée contenant au moins la majeure partie des additifs est utilisée lors du traitement.

3. Procédé selon la revendication 1, **caractérisé en ce que** le traitement est un procédé de désencollage pour éliminer les agents d'encollage du tissu denim.

4. Procédé selon la revendication 1 ou 2, **caractérisé en ce que** le traitement est un traitement par lavage à la pierre du tissu denim pour obtenir un aspect lavé à la pierre.

5. Procédé selon l'une des revendications 1 à 3, **caractérisé en ce que** la solution aqueuse décolorée est utilisée pour l'ennoblissement du premier tissu denim.

6. Procédé selon l'une des revendications 1 à 3, **caractérisé en ce que** la solution aqueuse décolorée est utilisée pour l'ennoblissement d'un second tissu denim.

7. Procédé selon l'une des revendications 1 à 5, **caractérisé en ce que** de l'ozone est utilisé lors du processus de décoloration, l'ozone étant, de préférence, introduit dans la solution aqueuse.

8. Procédé selon l'une des revendications 1 à 7, **caractérisé en ce que**, lors du processus de décoloration, de la solution aqueuse subsiste dans le tambour de lavage et l'on poursuit le traitement.
